# EUROPEAN PATENT APPLICATION

(11) **EP 4 674 792 A1**
(43) Date of publication of application: **07.01.2026**
(21) Application number: 25159756.3
(22) Date of filing: 24.02.2025
(51) Int. Cl.: B65G 37/00, B65G 47/51, B65G 47/71, B65G 21/20

(54) **APPARATUS AND METHOD FOR TRANSFERRING AND ACCUMULATING OBJECTS AND PACKAGING LINE COMPRISING SAID APPARATUS**

(30) Priority: 01.07.2024 IT 202400015166
(71) Applicant: Europool S.r.l., 43036 Fidenza (PR) (IT)
(72) Inventor: PRIERO, Marco, 43036 FIDENZA (PARMA) (IT)
(74) Representative: Bacchini, Davide

(57) **Abstract**

Apparatus (1) for transferring and accumulating objects (100) comprising:
- a plurality of accumulation channels (3) parallel to one another;
- a single-row conveyor belt (4) of objects (100) upstream of the accumulation channels (3);
- at least one loading guide (10) slidingly mounted relative to the conveyor belt (4) and having a curvilinear portion so as to be able to transfer the objects (100) from the conveyor belt (4) to the accumulation channels (3);
- a flow diverter device (12) interposed between the loading guide (10) and the accumulation channels (3), said diverter device (12) comprising a distributor channel (120) extending along a distribution direction (D3) and shaped to receive the objects (100) from the loading guide (10) and to direct them exclusively towards one of the accumulation channels (3),
said diverter device (12) being configurable in at least:
- a first configuration, in which the distribution direction (D3) is substantially parallel with respect to the accumulation direction (D1), so as to direct the flow of objects (100) towards a first accumulation channel (3);
- a second configuration, in which the distribution direction (D3) is inclined with respect to the accumulation direction (D1), so as to direct the flow of objects (100) towards a second accumulation channel (3), adjacent to the first.

## Description

The present invention relates to an apparatus and a method for transferring and accumulating objects and a packaging line comprising such an apparatus. In particular, the objects may be bottles, dispensers, containers or the like.

The proposed invention finds application in the food and beverage industry, or in general in the logistics field.

In production and packaging lines, for example between two successive workstations, the use of an accumulation table which acts as a buffer for the objects coming from the upstream station is known, in particular when jamming occurs downstream and/or during maintenance interventions. The use of an accumulation table therefore prevents having to stop the upstream station as well.

There are different accumulation table architectures and different accumulation logics on the market, tailored to the specific needs of the line.

For example, WO2014/076390 presents an accumulation table interposed between an input belt and an output belt, on which rows of objects are transferred and on which heads and/or manipulating robots adapted to move the rows on the table operate.

Feeding in rows can cause problems with the continuous operation of the system. In addition, the use of manipulating robots affects overall dimensions and increases the complexity of the line control logic.

Furthermore, some types of products, particularly delicate ones, require careful handling management.

Another solution of known type, described in EP3221240, shows an accumulator device for dynamically accumulating products in which two parallel conveyor belts are put in communication by a transfer device (or curved guide) movable along the belts. By moving the transfer device along the belts, it is possible to generate a certain space between two products so that products do not arrive downstream of the transfer device for a given time interval.

Such a device is used for small accumulation tables. As the size of the device increases, the speed and effort required accordingly increase, losing efficiency (i.e., lower hourly line yield).

The regulation of the flow of objects moving forward on the conveyor belt towards the curved guide is carried out by means of a dosing device mounted in a fixed position on the conveyor structure, upstream of the guide itself.

However, this solution has an obvious speed limit linked to the downtimes with flow stop, emptying of the production queue and the shifting of the guide. Such a limit becomes critical especially for high speeds and smaller formats (thus less stable), already manifesting problems at around 7000-8000 bottles per hour.

There is therefore a need for a solution that allows a high level of efficiency to be maintained, even at high speeds.

In this context, the technical task at the basis of the present invention is to propose an apparatus and a method for transferring and accumulating objects and a packaging line which overcome the problems of the prior art cited above.

In particular, the object of the present invention is to provide an apparatus and a method for transferring and accumulating objects, which is capable of operating continuously and reliably even at high speeds, regardless of the format of the objects.

The stated technical task and specified objects are substantially achieved by an apparatus for transferring and accumulating objects, comprising:
- a plurality of accumulation channels parallel to one another, each accumulation channel having an elongated extension along a direction parallel to an accumulation direction between a loading end and an unloading end for loading and unloading the objects;
- a single-row conveyor belt for feeding objects, on which the objects move forward one after the other in single row, said conveyor belt being arranged upstream of the accumulation channels at the loading end of said accumulation channels and extending along a feed direction which is transverse to the accumulation direction;
- at least one loading guide slidingly mounted relative to said conveyor belt, said loading guide having at least one curvilinear portion so as to be able to transfer the objects from the conveyor belt to the accumulation channels;
- a flow diverter device interposed between said at least one loading guide and the plurality of accumulation channels, said diverter device comprising a distributor channel extending along a distribution direction, said distributor channel being shaped to receive the objects coming from said at least one loading guide and to direct them exclusively towards one of the accumulation channels,
said diverter device being configurable in at least:
- a first configuration, in which the distribution direction is substantially parallel with respect to the accumulation direction, so as to direct the flow of objects towards a first accumulation channel;
- a second configuration, in which the distribution direction is inclined with respect to the accumulation direction, so as to direct the flow of objects towards a second accumulation channel, adjacent to the first.

**In** accordance with one embodiment, the apparatus comprises a control unit configured to:
- in response to a filling condition of the first accumulation channel, command the diverter device to pass from the first configuration to the second configuration, thus directing the flow towards the second accumulation channel, adjacent to the first;
- in response to reaching by the diverter device of the second configuration, command said at least one loading guide slidingly along the feed channel so that it reaches a position such that its outlet is positioned at the loading end of the second accumulation channel.

Preferably, said at least one loading guide and the diverter device are mutually coupled so that sliding of the loading guide into said position causes the diverter device to pass from the second configuration to the first configuration.

In accordance with one embodiment, the diverter device comprises a telescopic guide device and is configured to extend parallel to the distribution direction so as to assume at least one retracted position and one extracted position, in said extracted position defining an extension of the distributor channel.

Preferably, the guide device comprises a pair of telescopic lateral barriers arranged on opposite sides of the distributor channel.

In accordance with one embodiment, the control unit is configured to command the guide device to assume the retracted position, at least partially before commanding the diverter device to pass to the second configuration.

The stated technical task and the specified objects are substantially achieved by a packaging line comprising an infeed unit for objects, an outfeed unit for objects and an apparatus (1) as described, said apparatus being interposed between the inlet and the outlet of the packaging line. The stated technical task and the specified objects are substantially achieved by a method for transferring and accumulating objects employing the proposed apparatus, said method comprising the following steps:
- arranging the loading guide with an outlet thereof at the loading end of a first accumulation channel of the apparatus and configuring the flow diverter device in the first configuration;
- feeding the objects along the conveyor belt and directing them towards said first accumulation channel by means of the loading guide and the diverter device;
- in response to reaching of a filling condition of the first accumulation channel, taking the diverter device into the second configuration, so that the flow of objects is diverted towards a second accumulation channel, adjacent to the first;
- after taking the diverter device into the second configuration, moving the loading guide parallel to the feed direction, so that it is positioned with its outlet at the loading end of the second accumulation channel.

Preferably, the step of moving the loading guide causes the diverter device to pass from the second configuration to the first configuration.

According to one aspect of the invention, during the step of feeding the objects and directing them towards said first accumulation channel, the guide device is in the extracted position; said method comprising a step of taking the guide device into the retracted position at least partially before the step of taking the diverter device into the second configuration.

Further features and advantages of the present invention will become more apparent from the following approximate, and hence non-limiting, description of a preferred, but not exclusive, embodiment of an apparatus for transferring and accumulating objects and a packaging line, as illustrated in the appended drawings, in which:
- Figures 1 to 4 illustrate views from above of an apparatus for transferring and accumulating objects, according to the present invention, in different sequential operating steps;

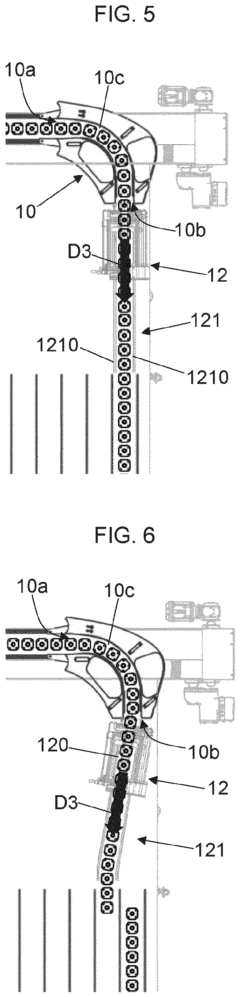

- Figures 5 and 6 illustrate an enlargement (loading guide and diverter device) of the apparatus in the configurations of Figures 1 and 3, respectively.

With reference to the Figures, number 1 denotes an apparatus for transferring and accumulating objects 100.

In this context, the objects 100 can be containers, such as bottles, dispensers, jars, cans.

Alternatively, the objects 100 can also be packages of products, e.g., powdered coffee or tea.

The apparatus 1 comprises a plurality of accumulation channels 3 parallel to one another.

Each accumulation channel 3 has a linear extension between a loading end 3a and an unloading end 3b of the objects 100.

In particular, the accumulation channels 3 have an extension along directions parallel to an accumulation direction D1.

Therefore, the accumulation channels 3 are flanked according to a direction which is orthogonal to the accumulation direction D1.

In the embodiment described and illustrated herein, the plurality of accumulation channels 3 forms an accumulation table 2.

Alternatively, the accumulation channels 3 may be part of two or more flanked accumulation tables.

Upstream of the accumulation channels 3, a single-row conveyor belt 4 is arranged, on which the objects 100 move forward one after the other in single row.

In particular, the conveyor belt 4 is arranged at the loading ends 3a of the accumulation channels 3.

The conveyor belt 4 extends linearly along a feeding direction D2 which is transverse to the accumulation direction D1. In the preferred embodiment, illustrated in the Figures, the feed direction D2 is orthogonal to the accumulation direction D1.

The apparatus 1 comprises at least one loading guide 10 slidingly mounted on the conveyor belt 4.

In this context, precisely because it slides on the conveyor belt 4, the loading guide 10 is also called a carriage.

The loading guide 10 has at least one curvilinear portion so as to be able to enable a transfer of objects 100 from the conveyor belt 4 to one of the accumulation channels 3, as will be better described below.

The loading guide 10 comprises an inlet 10a, an outlet 10b and a curvilinear passage 10c which extends between the inlet 10a and the outlet 10b. The outlet 10b is facing towards the accumulation channels 3.

The loading guide 10 is mounted on the conveyor belt 4 so that the inlet 10a of the loading guide 10 is in communication with the conveyor belt 4 to receive the objects 100.

In particular, the loading guide 10 has a curvature such as to allow a transfer of the objects 100 substantially at 90°, i.e., passing from the feed direction D2 to a direction parallel to the accumulation direction D1.

In particular, the loading guide 10 is configured to enable the transfer of the objects 100 from the conveyor belt 4 towards the plurality of accumulation channels 3.

In particular, the loading guide 10 is slidingly mounted on the conveyor belt 4 so as to assume a plurality of positions such that the outlet 10b is alternatively at the loading end 3a of each of the accumulation channels 3, at a first distance from it. In other words, the outlet 10b is facing the accumulation channel 3 at a distance. In other words, the outlet 10b is aligned with that accumulation channel 3.

The apparatus 1 comprises a diverter device 12 of the flow of objects 100. The diverter device 12 is arranged downstream of the loading guide 10, in particular downstream of the outlet 10b. In this context, the expression "downstream" is always to be referred to the direction in which the objects 100 move forward within the apparatus 1.

The diverter device 12 comprises a distributor channel 120 extending along a distribution direction D3. The distribution channel 120 is shaped to receive the objects 100 coming from the loading guide 10 and to direct them exclusively towards one of the accumulation channels 3, as will be explained better below.

The diverter device 12 is configurable at least in a first configuration and a second configuration.

In the first configuration, the distribution direction D3 is substantially parallel to the accumulation direction D1. In other words, the distributor channel 120 is substantially aligned with the accumulation channel 3 in filling.

In the second configuration, the distribution direction D3 is inclined with respect to the accumulation direction D1. In other words, the distributor channel 120 is inclined to divert the flow of objects 100 into another accumulation channel 3.

In particular, the diverter device 12 is single-row.

In the preferred embodiment, the diverter device 12 is rotatably mounted on the loading guide 10. Preferably, the rotation axis is transverse, in particular orthogonal, to the plane defined by the accumulation direction D1 and by the feed direction D2.

Let us consider a situation in which the loading guide 10 is in a position with the outlet 10b at a first accumulation channel 3 to be filled. In other words, the outlet 10b is aligned with the first accumulation channel 3 to be filled. Let us consider the diverter device 12 in the first configuration: the distributor channel 120 is aligned with the outlet 10b on one side and with the first accumulation channel 3 on the other. In this manner, the first accumulation channel 3 receives the flow of objects from the conveyor belt 4.

Upon reaching a filling condition of this first accumulation channel 3, the diverter device 12 is taken into the second configuration, so that the distributor channel 120 is transverse between the outlet 10b, still at/facing the first accumulation channel 3, and a second accumulation channel 3, adjacent to the first. In this manner, the flow of objects 100 is diverted continuously into the second accumulation channel 3. So far, the position of the loading guide 10 has not changed, i.e. its outlet 10b is still at the first accumulation channel 3.

Preferably, the apparatus 1 comprises drive means (not illustrated) of the diverter device 12 between the first configuration and the second configuration. Preferably, the drive means are configured to impose a rotation of a predefined angle, identifying the distance between an accumulation channel 3 and the adjacent one.

Preferably, the loading guide 10 and the diverter device 12 are mutually coupled so that sliding of the loading guide 10 from a first position, in which its outlet 10b is at a first accumulation channel 3, to a second position, in which its outlet 10b is at a second accumulation channel 3, causes the diverter device 12 to pass from the second configuration to the first.

In other words, the loading guide 10 follows the diverter device 12. The latter is then inclined to divert the flow onto another accumulation channel 3 (indicated until now as "second"). Once the inclined second configuration is reached, the loading guide 10 is moved into the so-called second position, in which its outlet 3b is facing the second accumulation channel 3. The movement of the loading guide 10 into this new position causes the diverter device 12 to return into the first configuration, i.e. the distributor channel 120 aligns with the second accumulation channel 3.

The tracking operating logic allows continuous changing of the accumulation channel to be filled, without ever interrupting the flow. This is particularly advantageous for apparatuses that operate at high hourly speeds.

In particular, the loading guide 10 can assume a plurality of positions along the conveyor belt 4 such that its outlet 10b is at the loading end 3a of each of the accumulation channels 3, at a distance from it. It is therefore possible to define a first position of the loading guide 10, in which its outlet 3b is at the loading end 3a of the first accumulation channel 3, and a second position, in which its outlet 3b is at the loading end 3a of the second accumulation channel 3. In each position of the loading guide 10, the diverter device 12 can be taken into the two configurations proposed. Passing of the loading guide 10 from one position to the other causes the diverter device 12 to pass from the second configuration (transverse) to the first configuration (aligned) with respect to the accumulation channel 3 affected by the flow.

Preferably, the loading guide 10 and the diverter device 12 define tracking distribution means of the flow of objects 100 to the plurality of accumulation channels 3.

Preferably, the apparatus 1 comprises a control unit 20 configured to, in response to a filling condition of the first accumulation channel 3, command the diverter device 12 to pass from the first configuration to the second, thus directing the flow towards the second accumulation channel 3 adjacent to the first.

The control unit 20 is preferably also configured to, in response to reaching by the diverter device 12 of the second configuration, command the loading guide 10 slidingly along the feed channel 4 so that it reaches a position such that its outlet 10b is positioned at the loading end 3a of the second accumulation channel 3.

In particular, the loading guide 10 is commanded to slide from a first position, in which the outlet 10b is positioned at the first accumulation channel 3, to a second position, in which the outlet 10b is positioned at the second accumulation channel 3.

As stated above, preferably the loading guide 10 and the diverter device 12 are mutually connected so that passing of the loading guide 10 from the first to the second position causes the diverter device 12 to pass from the second to the first configuration.

In the preferred embodiment, illustrated in the Figures, the diverter device 12 comprises a telescopic guide device 121 configured to extend parallel to the distribution direction D3. In other words, the guide device 121 when extended constitutes an extension of the distributor channel 120. In particular, the guide device 121 is configurable in at least a retracted position and an extracted position. In the extracted position, it defines an extension of the distributor channel 120.

Preferably, the guide device 121 comprises a pair of telescopic lateral barriers 1210 arranged on opposite sides of the distributor channel 120.

In this case, the control unit 20 is preferably configured also to retract the guide device 121 (i.e., take it into the retracted position) with the diverter device 12 still in the first configuration, before commanding its passing towards the second configuration.

Then, the control unit 20 is preferably configured also to extend the guide device 121 (i.e., take it into the extracted position) once the diverter device 12 has been taken into the second configuration.

In accordance with an embodiment, the accumulation table 2 comprises a first zone 2a without accumulation channels 3 and a second zone 2b on which the accumulation channels 3 are arranged. The first zone 2a supports the diverter device 12.

In particular, the first zone 2a and the second zone 2b are sequential along the advancement direction of the objects 100.

The apparatus 1 proposed is therefore configured as a dynamic tracking buffer.

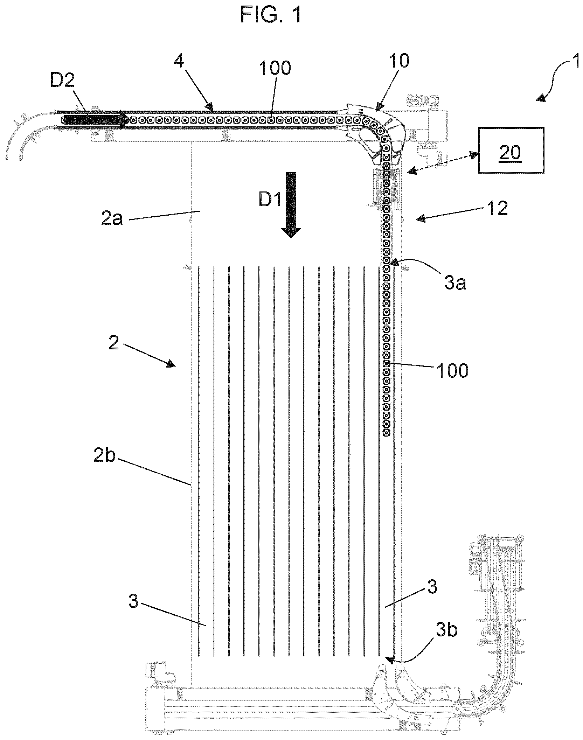

The method for transferring and accumulating objects, according to the present invention, is described below with reference to Figures 1 to 4, which show different operating steps.

The method is implemented by means of the proposed apparatus.

Consider Figure 1 initially, where the objects 100 are fed along the conveyor belt 4 and the loading guide 10 is located with its outlet 10b at the loading end 3a of a first accumulation channel 3. The diverter device 12 is in the first configuration, so the objects 100 advance in a continuous flow from the conveyor belt 4 into the first accumulation channel 3, which is filled.

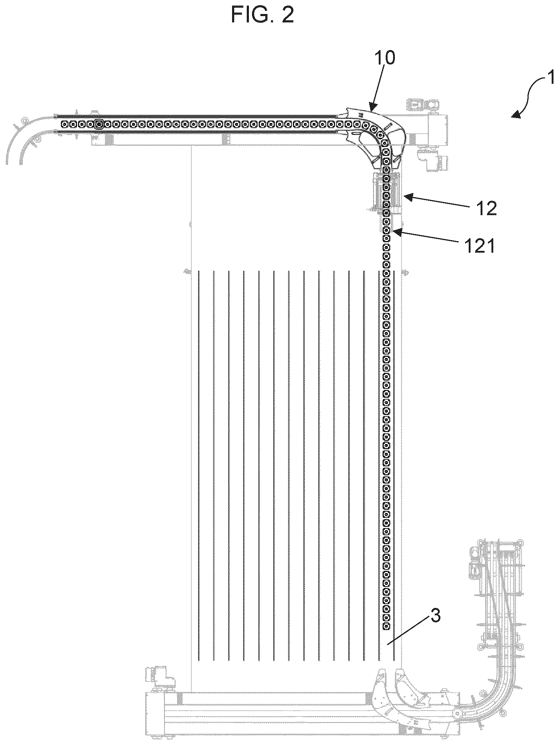

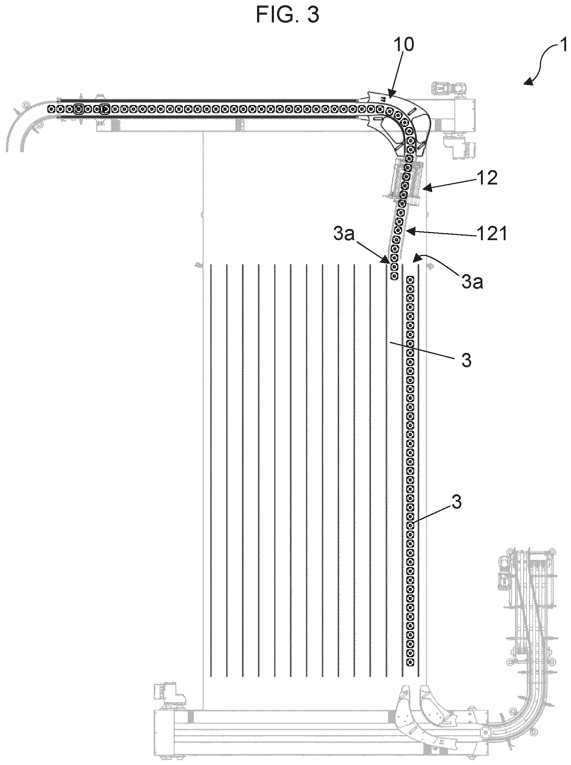

When loading of the first accumulation channel 3 is completed (Figure 2), the diverter device 12 passes from the first configuration to the second configuration, so it diverts the flow of objects 100 towards a second accumulation channel 3, in particular adjacent to the first. The apparatus is in the step of Figure 3.

In this step, the loading guide 10 is still in the aforesaid position, with the outlet 10b at the filled first accumulation channel 3.

It should be noted that everything occurs with the objects 100 in continuous advancement. There are no interruptions of flow.

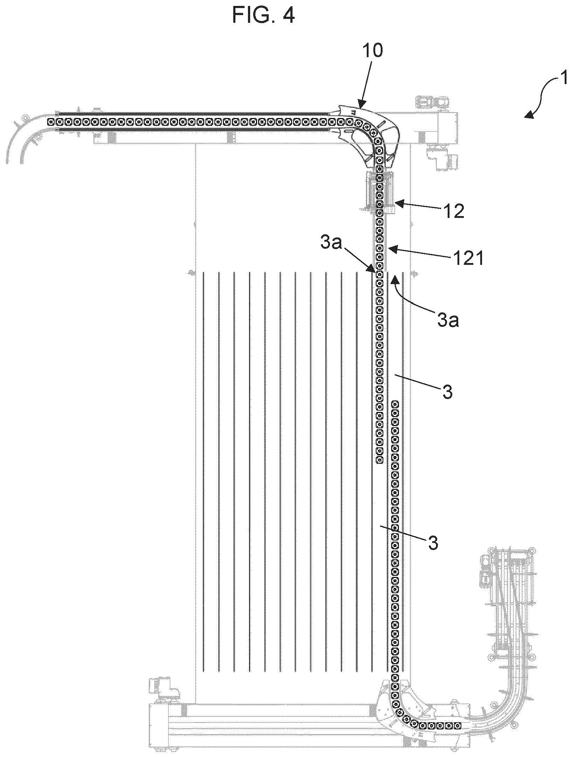

At this point, i.e., once the diverter device 12 has been taken into the second configuration, the loading guide 10 can move to the subsequent accumulation channel (indicated here as the second accumulation channel 3), which, in the illustrations, is located immediately to the right (seeing it from the viewpoint of an observer solidly constrained to the flow of objects). The loading guide 10 moves parallel to the feed direction D2, in the opposite direction to the flow of objects 100 on the conveyor belt 4. The loading guide 10 assumes a new position so that it is located with its outlet 10b at the loading end 3a of the second accumulation channel 3 (illustrated in Figure 4).

This method can be repeated for all the accumulation channels 3 present. When loading is completed, the loading guide 10 returns with its outlet 10b to the first accumulation channel 3.

The unloading of the accumulation channels 3 occurs in sequence from the first channel (left) to the last (right). The images of the unloading are not provided herein, as the focus of the invention is on the loading.

In accordance with the preferred embodiment, illustrated in the Figures, in the initial condition described above of Figure 1 (loading of the first accumulation channel 3), the guide device 121 is in the extracted position. Preferably, the guide device 121 is taken into the retracted position at least partially before configuring the diverter device 12 in the second configuration. In this manner, a part of the objects 100 exiting from the distributor channel 120 will continue their advancement along the first accumulation channel 3, whereas the remaining ones are diverted onto the second accumulation channel 3.

Once the second configuration is reached, the method comprises a step of taking the guide device 121 into its extracted position.

The features of the apparatus and method for transferring and accumulating objects and the packaging line according to the present invention emerge clearly from the above description, as do the advantages.

In particular, the combined use of the diverter device described and the curvilinear loading guide guarantees excellent continuous operation of the apparatus, even at high speeds and for large formats (e.g. 5-10 litres), for example up to 20,000 water dispensers per hour.

Furthermore, with this combination it is possible to make movements on a table of broad width, keeping the apparatus simple (in the sense of reduced use of components).

Furthermore, the presence of the guide device facilitates this operation, especially at high speeds.

## Claims

1. An apparatus (1) for transferring and accumulating objects (100), said apparatus (1) comprising:
- a plurality of accumulation channels (3) parallel to one another, each accumulation channel (3) extending elongated along a direction parallel to an accumulation direction (D1) between a loading end (3a) and an unloading end (3b) for loading and unloading the objects (100);
- a single-row conveyor belt (4) for feeding objects (100), on which the objects (100) move forward one after the other in single row, said conveyor belt (4) being arranged upstream of the accumulation channels (3) at the loading end (3a) of said accumulation channels (3) and extending along a feed direction (D2) which is transverse to the accumulation direction (D1);
- at least one loading guide (10) slidingly mounted relative to said conveyor belt (4), said loading guide (10) having at least one curvilinear portion so as to be able to transfer the objects (100) from the conveyor belt (4) to the accumulation channels (3);
- a flow diverter device (12) interposed between said loading guide (10) and the plurality of accumulation channels (3), said diverter device (12) comprising a distributor channel (120) extending along a distribution direction (D3), said distributor channel (120) being shaped to receive the objects (100) coming from said at least one loading guide (10) and to direct them exclusively towards one of the accumulation channels (3),
said diverter device (12) being configurable in at least:
- a first configuration, in which the distribution direction (D3) is substantially parallel with respect to the accumulation direction (D1), so as to direct the flow of objects (100) towards a first accumulation channel (3);
- a second configuration, in which the distribution direction (D3) is inclined with respect to the accumulation direction (D1), so as to direct the flow of objects (100) towards a second accumulation channel (3), adjacent to the first.

2. The apparatus (1) according to claim 1, comprising a control unit (20) configured to:
- in response to a filling condition of the first accumulation channel (3), command the diverter device (12) to pass from the first configuration to the second configuration, thus directing the flow towards the second accumulation channel (3), adjacent to the first;
- in response to reaching by the diverter device (12) of the second configuration, command said at least one loading guide (10) slidingly along the conveyor belt (4) so that it reaches a position such that its outlet (10b) is positioned at the loading end (3a) of the second accumulation channel (3).

3. The apparatus (1) according to claim 2, wherein said at least one loading guide (10) and the diverter device (12) are mutually coupled so that sliding of the loading guide (10) into said position causes the diverter device (12) to pass from the second configuration to the first configuration.

4. The apparatus (1) according to any one of the preceding claims, wherein the diverter device (12) comprises a telescopic guide device (121) and is configured to extend parallel to the distribution direction (D3) so as to assume at least one retracted position and one extracted position, in said extracted position defining an extension of the distributor channel (120).

5. The apparatus (1) according to claim 4, wherein said guide device (121) comprises a pair of telescopic lateral barriers (1210) arranged on opposite sides of the distributor channel (120).

6. The apparatus (1) according to claim 4 or 5 when dependent on claim 2, wherein the control unit (20) is configured to command the guide device (121) to assume the retracted position, at least partially before commanding the diverter device (12) to pass to the second configuration.

7. A packaging line comprising an infeed unit for objects (100), an outfeed unit for objects (100) and an apparatus (1) according to any one of the preceding claims, said apparatus (1) being interposed between the infeed and outfeed units of the packaging line.

8. A method for transferring and accumulating objects (100) using the apparatus (1) according to any one of the preceding claims, said method comprising the following steps:
- arranging the loading guide (10) with an outlet thereof (10b) at the loading end (3a) of a first accumulation channel (3) of the apparatus (1) and configuring the flow diverter device (12) in the first configuration;
- feeding the objects (100) along the conveyor belt (4) and directing them (12) towards said first accumulation channel (3) by means of the loading guide (10) and the diverter device;
- in response to reaching of a filling condition of the first accumulation channel (3), taking the diverter device (12) into the second configuration, so that the flow of objects (100) is diverted towards a second accumulation channel (3), adjacent to the first;
- after taking the diverter device (12) into the second configuration, moving the loading guide (10) parallel to the feed direction (D2), so that it is positioned with its outlet (10b) at the loading end (31) of the second accumulation channel (3).

9. The method according to claim 8, wherein the step of moving the loading guide (10) causes the diverter device (12) to pass from the second configuration to the first configuration.

10. The method according to claim 8 or 9 using the apparatus (1) according to claim 4, wherein during the step of feeding the objects (100) and directing them towards said first accumulation channel (3), the guide device (121) is in the extracted position; said method comprising a step of taking the guide device into the retracted position at least partially before the step of taking the diverter device (12) into the second configuration.
